# EUROPEAN PATENT APPLICATION

(11) **EP 3 517 862 A1**
(43) Date of publication of application: **31.07.2019**
(21) Application number: 16916650.1
(22) Date of filing: 04.11.2016
(51) Int. Cl.: F25B 49/02, F04B 49/02

(54) **HEAT PUMP SET AND LOW-TEMPERATURE ACTIVATION METHOD AND DEVICE FOR COMPRESSOR THEREOF**

(30) Priority: 23.09.2016 CN 201610848337
(71) Applicant: GD Midea Heating & Ventilating Equipment Co., Ltd., Foshan, Guangdong 528311 (CN); Midea Group Co., Ltd., Foshan, Guangdong 528311 (CN)
(72) Inventor: ZHANG, Dengke, Foshan Guangdong 528311 (CN)
(74) Representative: Lam, Alvin
(86) International application number: PCT/CN2016/104676
(87) International publication number: WO 2018/053911

(57) **Abstract**

A low-temperature activation method for a compressor (1) in a heat pump set comprises the following steps: after reception of a startup activation instruction from a compressor (1), controlling the compressor (1) to be activated by means of a first activation means; after delay of a first preset time period, controlling the compressor (1) to stop operation, and after a delay of a second preset time period, controlling the compressor (1) to be activated by means of a second activation means; and after the compressor (1) has been activated by means of the second activation means, controlling the compressor (1) to stop operation, and after a delay of a third preset time period, controlling the compressor (1) to operate by means of a normal activation means.

## Description

### FIELD

The present disclosure relates to a field of air conditioner, and more particularly to a low-temperature activation method for a compressor in a heat pump set, a low-temperature activation device for a compressor in a heat pump set, and a heat pump set having the device.

### BACKGROUND

When a compressor is exposed to a low temperature environment for a long time, refrigerant of a system may all return to a cavity of the compressor, and in low-temperature environment, a starting resistance of the compressor increases due to solidification of lubricating oil, which may cause that the compressor may not be activated.

### SUMMARY

The present disclosure aims to solve one of the technical problems in the related art to at least some extent.

Accordingly, a first objective of the present disclosure is to provide a low-temperature activation method for a compressor in a heat pump set. With the method, the compressor is controlled to be activated twice in different activation modes, and then the compressor is controlled to be normally activated, thus ensuring that the compressor can be activated quickly, safely and reliably in low-temperature environment.

A second objective of the present disclosure is to provide a low-temperature activation device for a compressor in a heat pump set.

A third objective of the present disclosure is to provide a heat pump set.

To achieve the above objectives, a first aspect of embodiments of the present disclosure provides a low-temperature activation method for a compressor in a heat pump set, including: controlling the compressor to be activated in a first activation mode after a startup instruction of the compressor is received; controlling the compressor to stop operating after delaying a first preset time period, and controlling the compressor to be activated in a second activation mode after delaying a second preset time period; and controlling the compressor to stop operating after the compressor is activated in the second activation mode, and controlling the compressor to be activated in a normal activation mode and to operate after delaying a third preset time period.

With the low-temperature activation method for the compressor in the heat pump set according to embodiments of the present disclosure, the compressor is firstly controlled to be activated in the first activation mode after receiving the startup instruction of the compressor; and the compressor is controlled to stop operating after delaying the first preset time period, and then the compressor is controlled to be activated in the second activation mode after delaying the second preset time period, and the compressor is controlled to stop operating after the compressor is activated in the second activation mode, and finally, the compressor is controlled to be activated in the normal activation mode and to operate after delaying the third preset time period. In this way, the compressor is controlled to be activated twice in different activation modes, and then the compressor is controlled to be normally activated, thus ensuring that the compressor can be activated quickly, safely and reliably in low-temperature environment.

According to an embodiment of the present disclosure, after receiving the startup instruction of the compressor, the method further includes: obtaining a current outdoor environment temperature and a shutdown time period of the compressor, or obtaining an exhaust temperature of the compressor; determining whether the current outdoor environment temperature is lower than a first preset temperature and whether the shutdown time period of the compressor is greater than a fourth preset time period, or determining whether the exhaust temperature of the compressor is lower than a second preset temperature; if the current outdoor environment temperature is lower than the first preset temperature and the shutdown time period of the compressor is greater than the fourth preset time period, or the exhaust temperature of the compressor is lower than the second preset temperature, controlling the compressor to be activated in the first activation mode; otherwise, controlling the compressor to be activated in the normal activation mode and to operate.

According to an embodiment of the present disclosure, the first activation mode includes: a mode of controlling an operation frequency of the compressor to be increased to a first preset operation frequency.

According to an embodiment of the present disclosure, the heat pump set is further controlled to operate in a refrigeration mode when the compressor is controlled to be activated in the second activation mode.

According to an embodiment of the present disclosure, the second activation mode includes: a mode of controlling the compressor to enter into a forcing activation stage and controlling the compressor to enter into a condition selecting activation stage after the forcing activation stage ends, in which, the forcing activation stage includes: a stage of controlling the processor to operate with a second preset operation frequency for a fifth preset time period and thereafter controlling the compressor to operate with a third preset operation frequency for a sixth preset time period; the condition selecting activation stage includes: a stage of controlling the compressor to operate with a fourth preset operation frequency for a seventh preset time period and thereafter controlling the processor to operate with a fifth preset operation frequency for an eighth preset time period, in which, the second preset operation frequency < the third preset operation frequency < the fourth preset operation frequency < the fifth preset operation frequency.

According to an embodiment of the present disclosure, when the compressor is in the condition selecting activation stage, the method further includes: determining whether the exhaust temperature of the compressor is greater than or equal to a sum of a water temperature at an outlet of the heat pump set and a third preset temperature, or determining whether a total time of the compressor in the condition selecting activation stage is greater than a ninth preset time period; if the exhaust temperature of the compressor is greater than or equal to the sum of the water temperature at the outlet of the heat pump set and the third preset temperature, or the total time of the compressor in the condition selecting activation stage is greater than the ninth preset time period, controlling the condition selecting activation stage to end.

To achieve the above objectives, a second aspect of embodiments of the present disclosure provides a low-temperature activation device for a compressor in a heat pump set, including: an instruction receiving module and a control module. The instruction receiving module is configured to receive a startup instruction of a compressor. The control module is connected with the instruction receiving module, and is configured to control the compressor to be activated in a first activation mode after receiving the startup instruction of the compressor, control the compressor to stop operating after delaying a first preset time period, control the compressor to be activated in a second activation mode after delaying a second preset time period, control the compressor to stop operating after the compressor is activated in the second activation mode, and control the compressor to be activated in a normal activation mode and to operate after delaying a third preset time period.

With the low-temperature activation device for the compressor in the heat pump set according to embodiments of the present disclosure, the control module firstly controls the compressor to be activated in the first activation mode after the instruction receiving module receives the startup instruction of the compressor, and controls the compressor to stop operating after delaying the first preset time period, and then the control module controls the compressor to be activated in the second activation mode after delaying the second preset time period, and controls the compressor to stop operating after the compressor is activated in the second activation mode, and finally, the control module controls the compressor be activated in the normal activation mode and to operate after delaying the third preset time period. In this way, the compressor is controlled to be activated twice in different activation modes, and then the compressor is controlled to be normally activated, thus ensuring that the compressor can be activated quickly, safely and reliably in low-temperature environment.

According to an embodiment of the present disclosure, the above low-temperature activation device for the compressor in the heat pump set further includes: an obtaining module and a determining module. The obtaining module is configured to, after the startup instruction of the compressor is received, obtain a current outdoor environment temperature and a shutdown time period of the compressor, or obtain an exhaust temperature of the compressor. The determining module is connected with the obtaining module, and is configured to determine whether the current outdoor environment temperature is lower than a first preset temperature and whether the shutdown time period of the compressor is greater than a fourth preset time period, or determine whether the exhaust temperature of the compressor is lower than a second preset temperature, in which, if the current outdoor environment temperature is lower than the first preset temperature and the shutdown time period of the compressor is greater than the fourth preset time period, or the exhaust temperature of the compressor is lower than the second preset temperature, the control module controls the compressor to be activated in the first activation mode; otherwise, the control module directly controls the compressor to be activated in the normal activation mode and to operate.

According to an embodiment of the present disclosure, the first activation mode includes a mode of controlling an operation frequency of the compressor to be increased to a first preset operation frequency.

According to an embodiment of the present disclosure, the control module is further configured to control the heat pump set to operate in a refrigeration mode when the control module controls the compressor to be activated in the second activation mode.

According to an embodiment of the present disclosure, the second activation mode includes: a mode of controlling the compressor to enter into a forcing activation stage and controlling the compressor to enter into a condition selecting activation stage after the forcing activation stage ends, in which, the forcing activation stage includes: a stage of controlling the processor to operate with a second preset operation frequency for a fifth preset time period and thereafter controlling the compressor to operate with a third preset operation frequency for a sixth preset time period; the condition selecting activation stage includes: a stage of controlling the compressor to operate with a fourth preset operation frequency for a seventh preset time period and thereafter controlling the processor to operate with a fifth preset operation frequency for an eighth preset time period, in which, the second preset operation frequency < the third preset operation frequency < the fourth preset operation frequency < the fifth preset operation frequency.

According to an embodiment of the present disclosure, when the compressor is in the condition selecting activation stage, the control module is further configured to determine whether the exhaust temperature of the compressor is greater than or equal to a sum of a water temperature at an outlet of the heat pump set and a third preset temperature, or determine whether a total time of the compressor in the condition selecting activation stage is greater than a ninth preset time period; if the exhaust temperature of the compressor is greater than or equal to the sum of the water temperature at the outlet of the heat pump set and the third preset temperature, or the total time of the compressor in the condition selecting activation stage is greater than the ninth preset time period, the control module controls the condition selecting activation stage to end.

In addition, embodiments of the present disclosure further provide a heat hump set, including the above low-temperature activation device for the compressor in the heat hump set.

With the heat hump set of embodiments of the present disclosure, through the above low-temperature activation device for the compressor in the heat pump set, the compressor is controlled to be activated twice in different activation modes after receiving the startup instruction of the compressor, and then the compressor is controlled to be normally activated, thus ensuring that the compressor can be activated quickly, safely and reliably in low-temperature environment.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a flow chart illustrating a low-temperature activation method for a compressor in a heat pump set according to an embodiment of the present disclosure;
Fig. 2 is a schematic diagram illustrating a compressor being activated in a second activation mode according to an embodiment of the present disclosure;
Fig. 3 is a flow chart illustrating a low-temperature activation method for a compressor in a heat pump set according to an embodiment of the present disclosure;
Fig. 4 is a block diagram illustrating a low-temperature activation device for a compressor in a heat pump set according to an embodiment of the present disclosure;
Fig. 5 is a block diagram illustrating a low-temperature activation device for a compressor in a heat pump set according to an embodiment of the present disclosure; and
Fig. 6 is a schematic diagram illustrating a heat pump set according to an embodiment of the present disclosure.

### DETAILED DESCRIPTION

Detailed description will be made below to the embodiments of the present disclosure, examples of which are illustrated in the accompanying drawings, in which the same or similar numbers represent the same or similar elements or the elements with the same or similar function. The embodiments described in the following accompany drawings are exemplary, only for purpose of description of the present disclosure, but not constructed to limit the present disclosure.

A low-temperature activation method for a compressor in a heat pump set, a low-temperature activation device for a compressor in a heat pump set and a heat pump set having the device provided in the embodiments of the present disclosure will be described below with reference to the accompanying drawings.

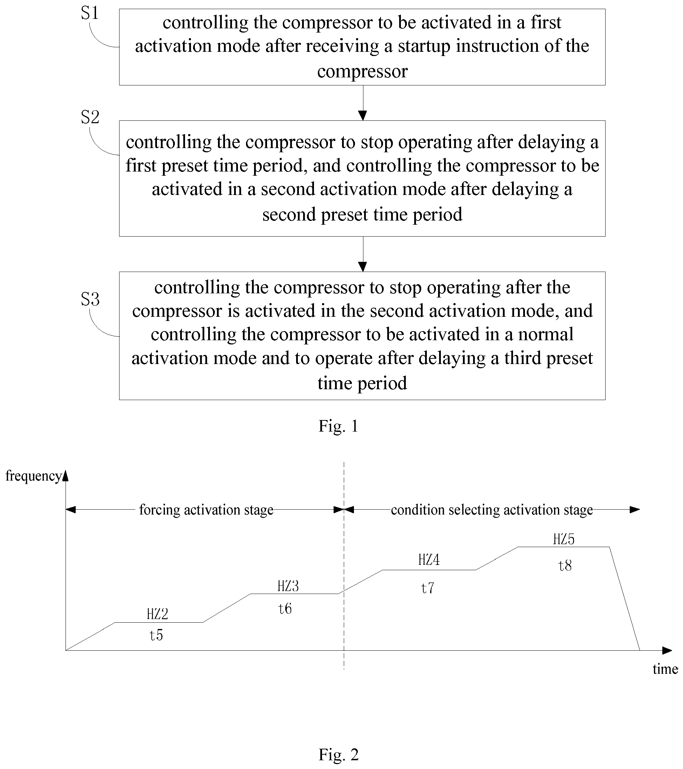

Fig. 1 is a flow chart illustrating a low-temperature activation method for a compressor in a heat pump set according to an embodiment of the present disclosure. As illustrated in Fig. 1, the low-temperature activation method for the compressor in the heat pump set may include the following steps.

At block S1, the compressor is controlled to be activated in a first activation mode after a startup instruction of the compressor is received.

At block S2, the compressor is controlled to stop operating after delaying a first preset time period, and the compressor is controlled to be activated in a second activation mode after delaying a second preset time period.

At block S3, the compressor is controlled to stop operating after the compressor is activated in the second activation mode, and the compressor is controlled to be activated in a normal activation mode and to operate after delaying a third preset time period.

The first preset time period, the second preset time period and the third preset time period may be calibrated according to an actual condition.

In detail, when a compressor is exposed to a low temperature environment for a long time, refrigerant of a system may all return to a cavity of the compressor, and in low-temperature environment, a starting resistance of the compressor increases due to solidification of lubricating oil, which may cause that the compressor may not be activated. In the related art, under the different environment temperatures, different operation time is provided for different operation frequencies, such that the operation frequency of the compressor is slowly increased to a rating operation frequency of the compressor. However, a long activation time is taken in this way.

For this, in embodiments of the present disclosure, the compressor is controlled to be activated in the first activation mode and in the second activation mode so as to enable the compressor to heat up quickly, and then the compressor is controlled to be activated in the normal activation mode, thus enabling the compressor to be activated quickly, safely and reliably.

In detail, the compressor is controlled to be activated in the first activation mode after the startup instruction of the compressor is received. The first activation mode is mainly to preheat the compressor so as to enable that the compressor heats up quickly, such that the first activation mode can be implemented as a fast activation mode. After the compressor is activated in the first activation mode, the compressor is continuously controlled to operate the first preset time period t1 (such as, 1 second), and then the compressor is controlled to stop operating. In this way, a first activation and stopping of the compressor is realized.

After the first activation and stopping of the compressor, the compressor is controlled to be activated in the second activation mode after delaying the second time period t2 (such as, 2 seconds). The first activation may enable the compressor to heat up quickly, however, since the environment temperature is low, a large amount of refrigerant exists in the compressor and lubricating oil is in a solid state, the temperature after the first activation may not reach an ideal temperature. In this case, the compressor is controlled to be activated again by employing the second activation mode, to make sure that the temperature of the compressor reaches the ideal temperature. The compressor is controlled to stop operating after the compressor is activated in the second activation mode, thereby realizing a second activation and stopping of the compressor. After the second activation and stopping, the compressor is controlled to operate in the normal activation mode and to operate after delaying the third preset time period t3 (such as, 2 seconds). In this way, the compressor can be activated quickly, safely and reliably.

According to an embodiment of the present disclosure, the heat pump set is also controlled to operate in a refrigeration mode when the compressor is controlled to be activated in the second activation mode.

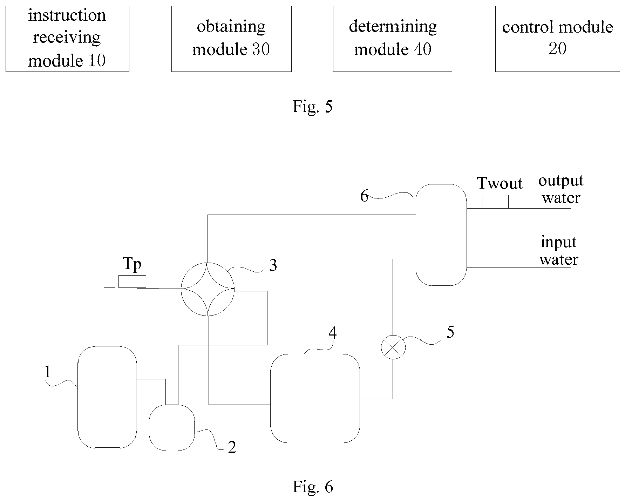

In detail, as illustrated in Fig. 6, during an activation process of the compressor being activated in the second activation mode, a four-way valve may be controlled to enable a system to be in a refrigeration operation state. The refrigerant coming from the compressor passes through the four-way valve, and firstly enters into an outdoor heat exchanger, then passes through a throttling element to a water-refrigerant heat exchanger, and finally returns to the compressor. In this way, heat is absorbed from the water, and the outdoor heat exchanger is taken as a condenser, such that the compressor heats up quickly to make the temperature reach the ideal temperature.

Further, according to an embodiment of the present disclosure, the first activation mode may include a mode of controlling an operation frequency of the compressor to be quickly increased to a first preset operation frequency. The first preset operation frequency may be calibrated according to the actual condition. For example, the first preset operation frequency may be a minimum operation frequency of the compressor.

In detail, when the compressor is in the process of first activation and stopping, the operation frequency of the compressor may be controlled to be increased at a rate of 4-6 Hz/s until the operation frequency of the compressor reaches a preset operation frequency point of the compressor, and the compressor is controlled to stop operating after the compressor operates for the first preset time period t1 (such as, 1-2 seconds). In this way, the compressor can heat up quickly.

According to an embodiment of the present disclosure, the second activation mode includes: a mode of controlling the compressor to enter into a forcing activation stage and controlling the compressor to enter into a condition selecting activation stage after the forcing activation stage ends. The forcing activation stage includes: a stage of controlling the processor to operate with a second preset operation frequency for a fifth preset time period and thereafter controlling the compressor to operate with a third preset operation frequency for a sixth preset time period. The condition selecting activation stage includes: a stage of controlling the compressor to operate with a fourth preset operation frequency for a seventh preset time period and thereafter controlling the processor to operate with a fifth preset operation frequency for an eighth preset time period. The second preset operation frequency < the third preset operation frequency < the fourth preset operation frequency < the fifth preset operation frequency. The second preset operation frequency, the third preset operation frequency, the fourth preset operation frequency, the fifth preset operation frequency, the fifth preset time period, the sixth preset time period, the seventh preset time period and the eighth preset time period may be calibrated according to the actual condition.

Further, when the compressor is in the condition selecting activation stage, the method further includes: determining whether the exhaust temperature of the compressor is greater than or equal to a sum of a water temperature at an outlet of the heat pump set and a third preset temperature, or determining whether a total time of the compressor in the condition selecting activation stage is greater than a ninth preset time period; when the exhaust temperature of the compressor is greater than or equal to the sum of the water temperature at the outlet of the heat pump set and the third preset temperature, or the total time of the compressor in the condition selecting activation stage is greater than the ninth preset time period, controlling the condition selecting activation stage to end. The third preset temperature and the ninth preset time period may be calibrated according to the actual condition.

In detail, as illustrated in Fig. 2, when the compressor is activated in the second activation mode, the operation frequency of the compressor is firstly controlled to be increased at a rate of 0.5 Hz/s - 1 Hz/s. In the case that the operation frequency of the compressor reaches the second preset operation frequency HZ2, after the compressor operates for the fifth preset time period t5, the operation frequency of the compressor is controlled to be increased to the third preset operation frequency HZ3 at the rate of 0.5 Hz/s - 1 Hz/s, and the compressor is controlled to operate for the sixth preset time period t6, and then the forcing activation stage ends. Then, in the case that the operation frequency of the compressor is controlled to be increased to the fourth preset operation frequency HZ4 at the rate of 0.5 Hz/s - 1 Hz/s, after the compressor is controlled to operate for the seventh preset time period t7, the operation frequency of the compressor is controlled to be increased to the fifth preset operation frequency HZ5 at the rate of 0.5 Hz/s - 1 Hz/s, and the compressor is controlled to operate for the eighth preset time period t8. Also, during the activation process of the compressor being activated in the second activation mode, the heat pump set operates in the refrigeration mode. During the process that the compressor operates with the fourth preset operation frequency HZ4 and the fifth preset operation frequency HZ5, if the total operation time of the compressor is greater than the ninth preset time period t9 (such as, 10 minutes), or the exhaust temperature Tp of the compressor is greater than or equal to the sum of the water temperature Twout at the outlet of the heat pump set and the third preset temperature T3 (such as, 10°C), the condition selecting activation stage ends, and the compressor stops operating. Then, the compressor is controlled to be activated in the normal activation mode and to operate.

Therefore, with the low-temperature activation method for the compressor in the heat pump set according to embodiments of the present disclosure, the compressor is controlled to be activated twice in different activation modes, such that the compressor can heat up quickly and the operation frequency can be increased to the target operation frequency quickly, thus ensuring that the compressor can be activated quickly, safely and reliably in low-temperature environment.

According to an embodiment of the present disclosure, after the startup instruction of the compressor is received, the method further includes: obtaining a current outdoor environment temperature and a shutdown time period of the compressor, or obtaining an exhaust temperature of the compressor; determining whether the current outdoor environment temperature is lower than a first preset temperature and whether the shutdown time period of the compressor is greater than a fourth preset time period, or determining whether the exhaust temperature of the compressor is lower than a second preset temperature; if the current outdoor environment temperature is lower than the first preset temperature and the shutdown time period of the compressor is greater than the fourth preset time period, or the exhaust temperature of the compressor is lower than the second preset temperature, controlling the compressor to be activated in the first activation mode; otherwise, controlling the compressor to be activated in the normal activation mode and to operate. The first preset temperature, the second preset temperature and the fourth preset time period may be calibrated according to the actual condition.

In other words, when the environment temperature is relatively high, or the shutdown time period of the compressor is relatively short, the compressor may be directly controlled to be activated in the normal activation mode and to operate.

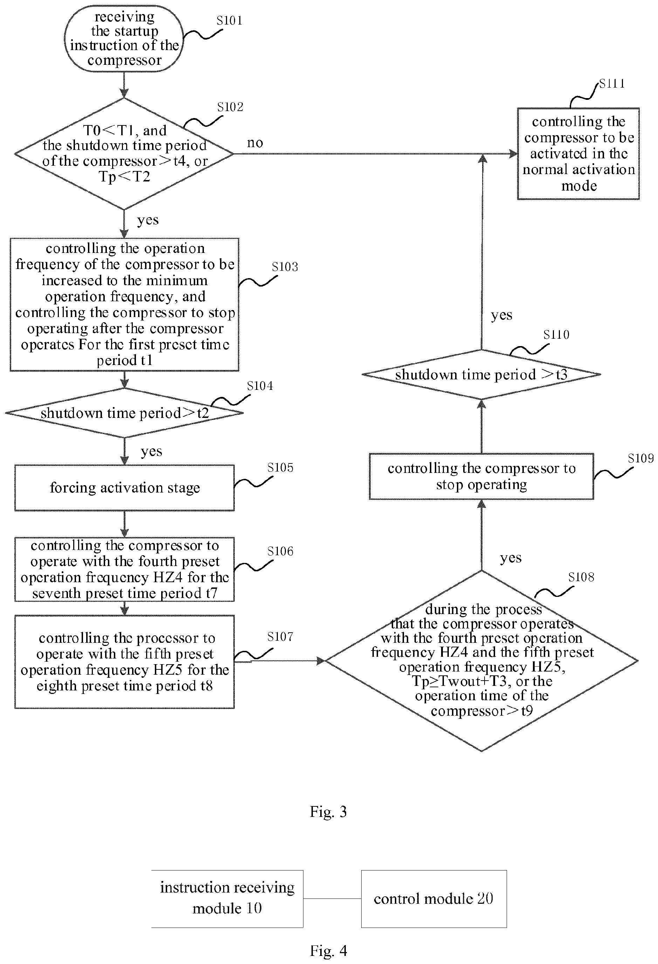

In detail, as illustrated in Fig. 3, the low-temperature activation method for the compressor in the heat pump set may include the following steps.

At block S101, the startup instruction of the compressor is received.

At block S102, it is determined whether the current outdoor environment temperature T0 is lower than the first preset temperature T1 (such as, -10°C) and whether the shutdown time period of the compressor is greater than the fourth preset time period t4 (such as, 2 hours), or it is determined whether the exhaust temperature Tp of the compressor is lower than the second preset temperature T2 (such as, 40 °C), and if yes, the step at block S103 is executed; if no, the step at block S111 is executed.

At block S103, the operation frequency of the compressor is controlled to be increased to the minimum operation frequency, and the compressor is controlled to stop operating after operating for the first preset time period t1.

At block S104, it is determined whether the shutdown time period of the compressor is greater than the second preset time period t2, and if yes, the step at block S105 is executed, if no, waiting.

At block S105, the compressor is controlled to enter into the forcing activation stage, the compressor is controlled to operate with the second preset operation frequency HZ2 for the fifth preset time period t5 and then to operate with the third preset operation frequency HZ3 for the sixth preset time period t6.

At block S106, the compressor is controlled to operate with the fourth preset operation frequency HZ4 for the seventh preset time period t7.

At block S107, the compressor is controlled to operate with the fifth preset operation frequency HZ5 for the eighth preset time period t8.

At block S108, during the process that the compressor operates with the fourth preset operation frequency HZ4 and the fifth preset operation frequency HZ5, it is determined whether the exhaust temperature Tp of the compressor is greater than or equal to the sum of the water temperature Twout at an outlet of the heat pump set and the third preset temperature T3 (such as, 10 °C), or it is determined whether the total time of the compressor is greater than the ninth preset time period t9 (such as, 10 minutes), and if yes, the step at block S109 is executed; if no, the step determining is executed continuously.

At block S109, the compressor is controlled to stop operating.

At block S110, it is determined whether the operation time period of the compressor is greater than the third preset time period t3, and if yes, the step at block Sill is executed; if no, waiting.

At block Sill, the compressor is controlled to operate in the normal activation mode.

In conclusion, with the low-temperature activation method for the compressor in the heat pump set according to embodiments of the present disclosure, the compressor is firstly controlled to be activated in the first activation mode after receiving the startup instruction of the compressor, the compressor is controlled to stop operating after delaying the first preset time period, and then the compressor is controlled to be activated in the second activation mode after delaying the second preset time period, and the compressor is controlled to stop operating after the compressor is activated in the second activation mode, and finally, the compressor is controlled to be activated in the normal activation mode and to operate after delaying the third preset time period. In this way, the compressor is controlled to be activated twice in different activation modes, and then the compressor is controlled to be normally activated, thus ensuring that the compressor can be activated quickly, safely and reliably in low-temperature environment.

Fig. 4 is a block diagram illustrating a low-temperature activation device for a compressor in a heat pump set according to an embodiment of the present disclosure. As illustrated in Fig. 4, the low-temperature activation device for the compressor in the heat pump set includes: an instruction receiving module 10 and a control module 20.

The instruction receiving module 10 is configured to receive a startup instruction of a compressor. The control module 20 is connected with the instruction receiving module 10, and the control module 20 is configured to control the compressor to be activated in a first activation mode after receiving the startup instruction of the compressor, control the compressor to stop operating after delaying a first preset time period, control the compressor to be activated in a second activation mode after delaying a second preset time period, control the compressor to stop operating after the compressor is activated in the second activation mode, and control the compressor to be activated in a normal activation mode and to operate after delaying a third preset time period.

In detail, the control module 20 firstly controls the compressor to be activated in the first activation mode after the instruction receiving module 10 receives the startup instruction of the compressor. The first activation mode is mainly to preheat the compressor to ensure that the compressor heats up quickly, which may be implemented as a fast activation mode. After the compressor is activated in the first activation mode, the compressor is continuously controlled to operate for the first preset time period t1 (such as, 1 second), and then the compressor is controlled to stop operating. In this way, a first activation and stopping of the compressor is realized.

After the first activation and stopping of the compressor, the control module 20 controls the compressor to be activated in the second activation mode after delaying the second time period t2 (such as, 2 seconds). The first activation may enable the compressor to heat up quickly, however, since the environment temperature is low, a large amount of refrigerant exists in the compressor and lubricating oil is in a solid state, the temperature after the first activation may not reach an ideal temperature. Therefore, the compressor is controlled to be activated again by employing the second activation mode, to make sure that the temperature of the compressor reaches the ideal temperature. The control module 20 controls the compressor to stop operating after the compressor is activated in the second activation mode, thus realizing a second activation and stopping of the compressor. After the second activation and stopping, the control module 20 controls the compressor to operate in the normal activation mode and to operate after delaying the third preset time period t3 (such as, 2 seconds), such that the compressor can be activated quickly, safely and reliably.

According to an embodiment of the present disclosure, the control module 20 is further control the heat pump set to operate in a refrigeration mode when the control module 20 controls the compressor to be activated in the second activation mode.

In detail, as illustrated in Fig. 6, during an activation process of the compressor 1 being activated in the second activation mode, the control module 20 may also control a four-way valve 3 to enable a system to be in a refrigeration operation state. The refrigerant coming from the compressor 1 passes through the four-way valve 3, and firstly enters into an outdoor heat exchanger 4, and then passes through a throttling element 5 to a water-refrigerant heat exchanger 6, and finally returns to the compressor 1. In this way, heat is absorbed from the water, and the outdoor heat exchanger 4 is taken as a condenser, such that the compressor heats up quickly until the temperature reaches the ideal temperature.

Further, according to an embodiment of the present disclosure, the first activation mode may include a mode of controlling an operation frequency of the compressor to be quickly increased to a first preset operation frequency. The first preset operation frequency may be a minimum operation frequency of the compressor.

In detail, when the compressor is in the process of first activation and stopping, the control module 20 controls the operation frequency of the compressor to be increased at a rate of 4-6 Hz/s until the operation frequency of the compressor reaches a preset operation frequency point of the compressor, and controls the compressor to stop operating after the compressor operates for the first preset time period t1 (such as, 1-2 seconds). In this way, the compressor can heat up quickly.

According to an embodiment of the present disclosure, the second activation mode includes: a mode of controlling the compressor to enter into a forcing activation stage and controlling the compressor to enter into a condition selecting activation stage after the forcing activation stage ends, in which, the forcing activation stage includes: a stage of controlling the processor to operate with a second preset operation frequency for a fifth preset time period and thereafter controlling the compressor to operate with a third preset operation frequency for a sixth preset time period; the condition selecting activation stage includes: a stage of controlling the compressor to operate with a fourth preset operation frequency for a seventh preset time period and thereafter controlling the processor to operate with a fifth preset operation frequency for an eighth preset time period, in which, the second preset operation frequency < the third preset operation frequency < the fourth preset operation frequency < the fifth preset operation frequency.

Further, when the compressor is in the condition selecting activation stage, the control module 20 is further configured to determine whether the exhaust temperature of the compressor is greater than or equal to a sum of a water temperature at an outlet of the heat pump set and a third preset temperature, or determine whether a total time of the compressor in the condition selecting activation stage is greater than a ninth preset time period. When the exhaust temperature of the compressor is greater than or equal to the sum of the water temperature at the outlet of the heat pump set and the third preset temperature, or the total time of the compressor in the condition selecting activation stage is greater than the ninth preset time period, the control module 20 controls the condition selecting activation stage to end.

In detail, as illustrated in Fig. 2, when the compressor is activated in the second activation mode, the control module 20 firstly controls the operation frequency of the compressor to be increased at a rate of 0.5 Hz/s - 1 Hz/s. In the case that the operation frequency of the compressor reaches the second preset operation frequency HZ2, after the compressor operates for the fifth preset time period t5, the control module 20 controls the operation frequency of the compressor to be increased to the third preset operation frequency HZ3 at the rate of 0.5 Hz/s - 1 Hz/s, and controls the compressor to operate for the sixth preset time period t6, and then the forcing activation stage ends. Then, in the case that the control module 20 controls the operation frequency of the compressor to be increased to the fourth preset operation frequency HZ4 at the rate of 0.5 Hz/s - 1 Hz/s, after the compressor is controlled to operate for the seventh preset time period t7, the control module 20controls the operation frequency of the compressor to be increased to the fifth preset operation frequency HZ5 at the rate of 0.5 Hz/s - 1 Hz/s, and controls the compressor to operate for the eighth preset time period t8. Also, during the activation process of the compressor is activated in the second activation mode, the heat pump set operates in the refrigeration mode. During the process that the compressor operates with the fourth preset operation frequency HZ4 and the fifth preset operation frequency HZ5, when the total operation time of the compressor is greater than the ninth preset operation time period t9 (such as, 10 minutes), or the exhaust temperature Tp of the compressor is greater than or equal to the sum of the water temperature Twout at the outlet of the heat pump set and the third preset temperature T3 (such as, 10°C), the control module 20 controls the condition selecting activation stage to end and controls the compressor to stop operating. Then, the control module 20 controls the compressor to be activated in the normal activation mode and to operate.

Therefore, with the low-temperature activation device for the compressor in the heat pump set according to embodiments of the present disclosure, the compressor is controlled to be activated twice in different activation modes, such that the compressor can heat up quickly and the operation frequency can be increased to the target operation frequency quickly, thus ensuring that the compressor can be activated quickly, safely and reliably in low-temperature environment.

According to an embodiment of the present disclosure, as illustrated in Fig. 5, the above low-temperature activation device for the compressor in the heat pump set further includes: an obtaining module 30 and a determining module 40. The obtaining module 30 is configured to, after the startup instruction of the compressor is received, obtain a current outdoor environment temperature and a shutdown time period of the compressor, or obtain an exhaust temperature of the compressor. The determining module 40 is connected with the obtaining module 30, and the determining module 40 is configured to determine whether the current outdoor environment temperature is lower than a first preset temperature and whether the shutdown time period of the compressor is greater than a fourth preset time period, or determine whether the exhaust temperature of the compressor is lower than a second preset temperature. If the current outdoor environment temperature is lower than the first preset temperature and the shutdown time period of the compressor is greater than the fourth preset time period, or the exhaust temperature of the compressor is lower than the second preset temperature, the control module 20 controls the compressor to be activated in the first activation mode; otherwise, the control module 20 directly controls the compressor to be activated in the normal activation mode and to operate.

In other words, when the environment temperature is relatively high, or the shutdown time period of the compressor is relatively short, the control module 20 may control the compressor to be activated in the normal activation mode and to operate.

With the low-temperature activation device for the compressor in the heat pump set according to embodiments of the present disclosure, the control module firstly controls the compressor to be activated in the first activation mode after the instruction receiving module receives the startup instruction of the compressor, and controls the compressor to stop operating after delaying the first preset time period, and then the control module controls the compressor to be activated in the second activation mode after delaying the second preset time period, and controls the compressor to stop operating after the compressor is activated in the second activation mode, and finally, the control module controls the compressor be activated in the normal activation mode and to operate after delaying the third preset time period. With the device, the compressor is controlled to be activated twice in different activation modes, and then the compressor is controlled to be normally activated, thus ensuring that the compressor can be activated quickly, safely and reliably in low-temperature environment.

Detailed description will be made to embodiments of the heat pump set of the present disclosure below.

According to an embodiment of the present disclosure, as illustrated in Fig. 6, the heat pump set may include: a compressor 1, a gas-liquid separator 2, a four-way valve 3, an outdoor heat exchanger 4, a throttling element 5, a water-refrigerant heat exchanger 6 and the above low-temperature activation device for the compressor in the heat pump set.

It should be noted that, the low-temperature activation device for the compressor in the heat pump set has been described in detail above, which is not elaborated herein. The above low-temperature activation method for the compressor in the heat pump set is applicable to the heat pump set in the embodiment of the present disclosure, which is not elaborated in detail herein.

With the heat pump set of embodiments of the present disclosure, through the above low-temperature activation device for the compressor in the heat pump set, the compressor is controlled to be activated twice in different activation modes after receiving the startup instruction of the compressor, and then the compressor is controlled to be normally activated, thus ensuring that the compressor can be activated quickly, safely and reliably in low-temperature environment.

In the description of the present disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise", "anti-clockwise", "axial", "radial" and "circumference" refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure.

In addition, terms such as "first" and "second" are merely used herein for purposes of description, and it cannot be understood as indicating or implying relative importance or implicitly indicating the number of technical features indicated. Furthermore, the feature defined with "first" and "second" may comprise at least one this feature distinctly or implicitly. In the description of the present disclosure, "a plurality of' means at least two, such as two, three, etc., unless specified otherwise.

In the present disclosure, unless specified or limited otherwise, the terms "mounted," "connected," "coupled" and "fixed" are understood broadly, such as fixed, detachable mountings, connections and couplings or integrated, and can be mechanical or electrical mountings, connections and couplings, and also can be direct and via media indirect mountings, connections, and couplings, and further can be inner mountings, connections and couplings of two components or interaction relations between two components, which can be understood by those skilled in the art according to the detail embodiment of the present disclosure.

In the present disclosure, unless specified or limited otherwise, the first characteristic is "on" or "under" the second characteristic refers to the first characteristic and the second characteristic can be direct or via media indirect mountings, connections, and couplings. And, the first characteristic is "on", "above", "over" the second characteristic may refer to the first characteristic is right over the second characteristic or is diagonal above the second characteristic, or just refer to the horizontal height of the first characteristic is higher than the horizontal height of the second characteristic. The first characteristic is "below" or "under" the second characteristic may refer to the first characteristic is right over the second characteristic or is diagonal under the second characteristic, or just refer to the horizontal height of the first characteristic is lower than the horizontal height of the second characteristic.

In the description of the present disclosure, reference throughout this specification to "an embodiment," "some embodiments," "an example," "a specific example," or "some examples," meaning a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, without a contradiction, the different embodiments or examples and the features of the different embodiments or examples can be combined by those skilled in the art.

Although explanatory embodiments have been shown and described above, it can be understood that, the above embodiments are exemplary, and cannot be construed to limit the present disclosure. The skilled in the art can make changes, alternatives, and modifications in the above embodiments without departing from scope of the present disclosure.

## Claims

1. A low-temperature activation method for a compressor in a heat pump set, comprising:
controlling the compressor to be activated in a first activation mode after a startup instruction of the compressor is received;
controlling the compressor to stop operating after delaying a first preset time period, and controlling the compressor to be activated in a second activation mode after delaying a second preset time period; and
controlling the compressor to stop operating after the compressor is activated in the second activation mode, and controlling the compressor to be activated in a normal activation mode and to operate after delaying a third preset time period.

2. The method according to claim 1, after receiving the startup instruction of the compressor, further comprising:
obtaining a current outdoor environment temperature and a shutdown time period of the compressor, or obtaining an exhaust temperature of the compressor;
determining whether the current outdoor environment temperature is lower than a first preset temperature and whether the shutdown time period of the compressor is greater than a fourth preset time period, or determining whether the exhaust temperature of the compressor is lower than a second preset temperature;
if the current outdoor environment temperature is lower than the first preset temperature and the shutdown time period of the compressor is greater than the fourth preset time period, or the exhaust temperature of the compressor is lower than the second preset temperature, controlling the compressor to be activated in the first activation mode; otherwise, controlling the compressor to be activated in the normal activation mode and to operate.

3. The method according to claim 1 or claim 2, wherein, the first activation mode comprises a mode of controlling an operation frequency of the compressor to be increased to a first preset operation frequency.

4. The method according to claim 1 or claim 2, further comprising: controlling the heat pump set to operate in a refrigeration mode when the compressor is controlled to be activated in the second activation mode.

5. The method according to claim 4, wherein,
the second activation mode comprises: a mode of controlling the compressor to enter into a forcing activation stage and controlling the compressor to enter into a condition selecting activation stage after the forcing activation stage ends, in which,
the forcing activation stage comprises: a stage of controlling the processor to operate with a second preset operation frequency for a fifth preset time period and thereafter controlling the compressor to operate with a third preset operation frequency for a sixth preset time period;
the condition selecting activation stage comprises: a stage of controlling the compressor to operate with a fourth preset operation frequency for a seventh preset time period and thereafter controlling the processor to operate with a fifth preset operation frequency for an eighth preset time period;
in which, the second preset operation frequency < the third preset operation frequency < the fourth preset operation frequency < the fifth preset operation frequency.

6. The method according to claim 5, when the compressor is in the condition selecting activation stage, further comprising:
determining whether the exhaust temperature of the compressor is greater than or equal to a sum of a water temperature at an outlet of the heat pump set and a third preset temperature, or determining whether a total time of the compressor in the condition selecting activation stage is greater than a ninth preset time period;
if the exhaust temperature of the compressor is greater than or equal to the sum of the water temperature at the outlet of the heat pump set and the third preset temperature, or the total time of the compressor in the condition selecting activation stage is greater than the ninth preset time period, controlling the condition selecting activation stage to end.

7. A low-temperature activation device for a compressor in a heat pump set, comprising:
an instruction receiving module, configured to receive a startup instruction of a compressor; and
a control module, connected with the instruction receiving module, and configured to control the compressor to be activated in a first activation mode after receiving the startup instruction of the compressor, control the compressor to stop operating after delaying a first preset time period, control the compressor to be activated in a second activation mode after delaying a second preset time period, control the compressor to stop operating after the compressor is activated in the second activation mode, and control the compressor to be activated in a normal activation mode and to operate after delaying a third preset time period.

8. The device according to claim 7, after receiving the startup instruction of the compressor, further comprising:
an obtaining module, configured to, after the startup instruction of the compressor is received, obtain a current outdoor environment temperature and a shutdown time period of the compressor, or obtain an exhaust temperature of the compressor; and
a determining module, connected with the obtaining module, and configured to determine whether the current outdoor environment temperature is lower than a first preset temperature and whether the shutdown time period of the compressor is greater than a fourth preset time period, or determine whether the exhaust temperature of the compressor is lower than a second preset temperature;
wherein, if the current outdoor environment temperature is lower than the first preset temperature and the shutdown time period of the compressor is greater than the fourth preset time period, or the exhaust temperature of the compressor is lower than the second preset temperature, the control module controls the compressor to be activated in the first activation mode; otherwise, the control module directly controls the compressor to be activated in the normal activation mode and to operate.

9. The device according to claim 7 or claim 8, wherein, the first activation mode comprises a mode of controlling an operation frequency of the compressor to be increased to a first preset operation frequency.

10. The device according to claim 7 or claim 8, the control module is further configured to control the heat pump set to operate in a refrigeration mode when the control module controls the compressor to be activated in the second activation mode.

11. The device according to claim 10, wherein,
the second activation mode comprises: a mode of controlling the compressor to enter into a forcing activation stage and controlling the compressor to enter into a condition selecting activation stage after the forcing activation stage ends, in which,
the forcing activation stage comprises: a stage of controlling the processor to operate with a second preset operation frequency for a fifth preset time period and thereafter controlling the compressor to operate with a third preset operation frequency for a sixth preset time period;
the condition selecting activation stage comprises: a stage of controlling the compressor to operate with a fourth preset operation frequency for a seventh preset time period and thereafter controlling the processor to operate with a fifth preset operation frequency for an eighth preset time period;
in which, the second preset operation frequency < the third preset operation frequency < the fourth preset operation frequency < the fifth preset operation frequency.

12. The device according to claim 11, wherein, when the compressor is in the condition selecting activation stage, the control module is further configured to determine whether the exhaust temperature of the compressor is greater than or equal to a sum of a water temperature at an outlet of the heat pump set and a third preset temperature, or determine whether a total time of the compressor in the condition selecting activation stage is greater than a ninth preset time period;
if the exhaust temperature of the compressor is greater than or equal to the sum of the water temperature at the outlet of the heat pump set and the third preset temperature, or the total time of the compressor in the condition selecting activation stage is greater than the ninth preset time period, the control module controls the condition selecting activation stage to end.

13. A heat pump set, comprising the low-temperature activation device for a compressor in a heat pump set according to any of claims 7-12.
